# EUROPÄISCHE PATENTSCHRIFT

(11) **EP 0 384 115 B1**
(45) Veröffentlichungstag und Bekanntmachung des Hinweises auf die Patenterteilung: **07.12.1994**
(21) Anmeldenummer: 90100759.1
(22) Anmeldetag: 15.01.1990
(51) Int. Cl.: G06F 11/34

(54) **Datenselektor**
Data selector
Sélecteur de données

(30) Priorität: 23.02.1989 EP 89103171
(43) Veröffentlichungstag der Anmeldung: 29.08.1990
(73) Patentinhaber: SIEMENS AKTIENGESELLSCHAFT, 80333 München (DE)
(72) Erfinder: Eber, Gerhard, Dipl.-Ing. (FH), D-8000 München 70 (DE); Münzenmaier, Thomas, Dipl.-Ing. (FH), D-8000 München 71 (DE)

(56) Entgegenhaltungen:
- EP-A- 0 136 168
- DE-A- 2 948 644
- US-A- 4 651 298
- ELEKTRONIK, Nr. 8, 22. April 1983, Seiten 91-94, München, DE; H. PHILIPP:"Datenreduktion und -selektion in der Praxis"

## Beschreibung

Die Erfindung bezieht sich auf einen Datenselektor für die Datenaufzeichnung eines zu prüfenden Mikrorechnersystems (Prüfling).

Neue, schnellere und immer speicherintensivere Rechnerarchitekturen erfordern für die Testphase eines Mikrorechnersystems eine Möglichkeit, um große Datenmengen von Adreß- und Datenbus aufzeichnen (tracen) zu können. Dabei ist es notwendig, größere Speicherbereiche mit unterschiedlichen Adreßlagen im Speicher in Echtzeit aufzuzeichnen. Für die Aufzeichnung von wahlfreien Adressen und Daten eines schnellen, beispielsweise 16/32 Bitrechnersystems stellen sich daher die Anforderungen einer schnellen Entscheidung über die Aufzeichnungsnotwendigkeit, einer schnellen Adreß- und Datenaufzeichnung, der Verarbeitung von größeren Datenmengen (Pufferfunktion) sowie eines großen Selektionsbereichs für die aufzuzeichnenden Daten.

Datentracer mit immensen Tracemöglichkeiten sind derzeit nicht vorhanden. Verfügbar sind lediglich Softwaretracer und - emulatoren, jedoch ohne größere, qualifizierte Datentracemöglichkeit sowie Hardwaretracer (Logikanalyzer) mit verschiedenen Triggerbedingungen, allerdings ebenfalls ohne qualifizierte, größere Datentracemöglichkeit.

Der Erfindung liegt die Aufgabe zugrunde, einen Datenselektor zu schaffen, der die eingangs genannten Anforderungen für die Aufzeichnung großer Datenmengen in einfacher weise erfüllt.

Diese Aufgabe wird gemäß der Erfindung gelöst durch einen, Tabellen über die zu selektierenden Daten enthaltenden Selektorspeicher, der in einen Adreßspeicher und einen Fensterspeicher aufgeteilt und derart mit den Adreßleitungen des Prüflings verbunden ist, daß die unteren, d.h. die niederwertigen Adreßleitungen des Prüflings an den Adreßspeicher und die oberen, d.h. die höherwertigen, an den Fensterspeicher belegt sind, sowie ferner durch einen Bit-Komparator, mit dem die Datenbusse von Adreßspeicher und Fensterspeicher, in denen bei Zugriff auf eine Adresse des Prüflings gleichzeitig zwei Zellen angesprochen werden, verglichen werden, der dann einem eingangsseitig mit dem Adreßbus und Datenbus des Prüflings und ausgangsseitig mit einem Rechner verbundenen Pufferspeicher einen Schreib-Puls gibt, wenn an einer Bitposition der beiden Speicher, Adreßspeicher und Fensterspeicher, jeweils eine Eins gesetzt ist.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispieles naher erläutert.

Es zeigen:

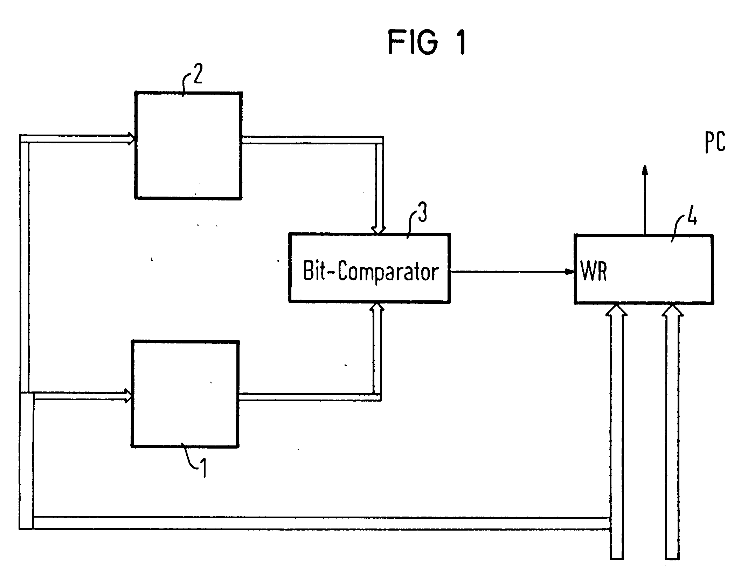

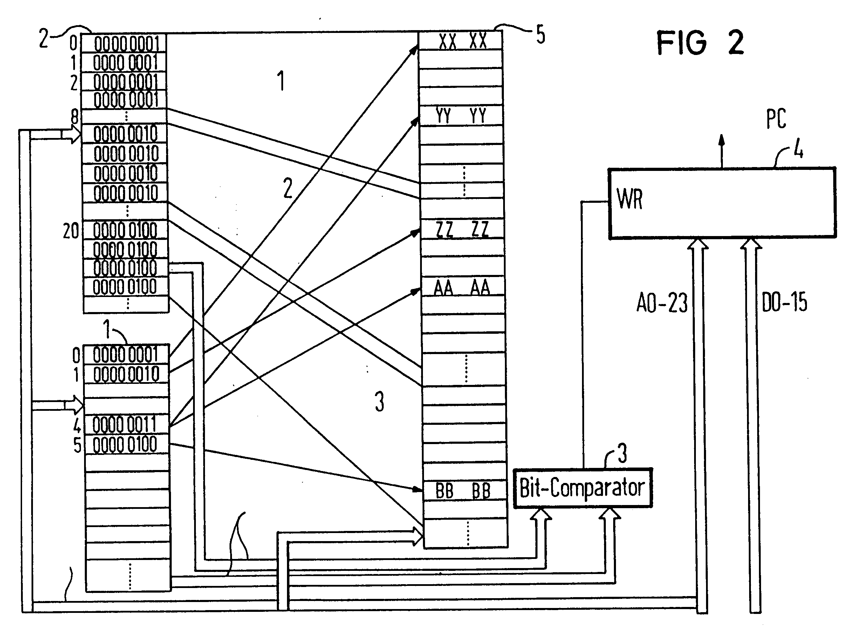

Fig. 1 einen Datenselektor im Blockschaltbild und Fig. 2 das Datenselektions-Prinzip.

Der in Figur 1 gezeigte Datenselektor enthält einen Selektorspeicher, der seiner Funktion nach in einen Adreß-Speicher 1 und einen Fenster-Speicher 2 aufgeteilt ist. Im Selektorspeicher sind Tabellen abgelegt, über die die Aufzeichnungsentscheidung über die zu selektierenden Daten erfolgt. Der Selektorspeicher kann aus sämtlich verfügbaren Speicherbausteinen bestehen, beispielsweise RAM's, EPROM's, EEPROM's oder Flash-EPROM's, wobei das Selektionsprinzip immer gleich ist. Alle Adreßleitungen eines zu prüfenden Mikrorechnersystems (Prüfling) sind mit dem Selektorspeicher verbunden und zwar derart, daß die unteren (niederwertigen) Adreßleitungen des Prüflings an den Adreßspeicher 1 und die oberen (höherwertigen) an den Fensterspeicher 2 gelegt sind. Dabei ist auch eine Überlappung der Leitungen des Adreß- und Fensterspeichers an der Nahtstelle möglich.

Die Datenbusse des Adreßspeichers 1 und des Fensterspeichers 2 werden mit einem Bitkomparator 3 verglichen, der dann einen WR-Puls (Schreib-Puls) an einen Pufferspeicher 4 gibt, wenn an einer Bitposition der beiden Speicher 1, 2 jeweils eine Eins gesetzt ist. Der Pufferspeicher 4, der beispielsweise aus mehreren FIFO's (first in - first out-Speicherelementen) besteht, ist eingangsseitig mit dem Adreßbus und dem Datenbus des Prüflings verbunden, während ein ausgangsseitiges Bussystem zu einem Rechner, beispielsweise einem PC führt. Nach der Übernahme der Daten (Adressen und Daten) vom Prüfling in den Pufferspeicher 4 erfolgt bei Erhalt eines WR-Pulses die Übertragung zum Rechner, wo sie zur weiteren Verarbeitung zur Verfügung stehen.

Das Datenselektions-Prinzip soll nachfolgend anhand von Figur 2 erläutert werden.

Der Schaltungsaufbau entspricht im wesentlichen dem nach Figur 1, wonach also die Adreßleitungen des Prüflings an den Adreßspeicher 1 und den Fensterspeicher 2 gelegt sind, deren Datenbus mit dem an den Pufferspeicher 4 angeschlossenen Bitkomperator 3 verglichen wird. Der Speicher im Prüfling, der an den Adreßbus angeschlossen ist, ist mit 5 bezeichnet. Adreßspeicher 1 und Fensterspeicher 2 bestehen im Ausführungsbeispiel aus 8Bit-Zellen.

Wird auf eine Adresse des Prüflings zugegriffen, werden gleichzeitig im Adreß- und Fensterspeicher zwei Zellen angesprochen. Sind nun an der gleichen Bitposition des Adreß- und Fensterspeichers Einsen gesetzt, werden Adresse und Daten des Prüflings in den Pufferspeicher 4 übernommen. Im Fensterspeicher 2, der in mehrere Fenster unterteilt ist (Fenster 1, 2, 3), darf je Zelle nur ein Bit gesetzt sein (vgl. die Darstellung in Figur 2), im Adreßspeicher 1 hingegen mehrere. Sind in einer Zelle des Adreßspeichers mehrere Bit's gesetzt, ist diese Adresse für mehrere Fenster gültig (max. für alle Fenster möglich). Dies ist in Figur 2 in der Weise dargestellt, daß von der Zelle 4 Verbindungslinien zu zwei Zellen (YY YY, AA AA) des Speichers 5 im Prüfling geführt sind. Die Zuordnung der Fenster zwischen Zellen des Fensterspeichers 2 und dem Speicher 5 im Prüfling ist durch Flächen für die Fenster 1, 2 und 3 wiedergegeben.

Überlappen sich die Adreßleitungen im Selektorspeicher, unterteilen sich die Fenster in Fensterbereiche. Die Anzahl der Fensterbereiche errechnet sich aus der Anzahl der überlappenden Adreßleitungen. Damit ist man bei der Adreßfestlegung der Fenster nicht mehr an die Schrittweite der Fenstergröße und die maximale Anzahl der möglichen Fenster (= Anzahl der setzbaren Bit's) gebunden. Für den Fall zweier Überlappungen (Beispiel: Adreßbus des Prüflings A0 - 23, Adreßspeicher hat die Leitungen A0 - 15 und der Fensterspeicher die Leitungen A14 - 23) ergeben sich vier Fensterbereiche je Fenster mit einem Adreßbereich, der gleich einem Viertel der Fenstergröße ist. Die Bereiche eines Fensters müssen im Fensterspeicher nicht aufeinander folgen.

Eine Reduktion der Adresse und damit eine Reduktion der aufzuzeichnenden Daten wird dadurch erreicht, daß nur die Adressen, die an den Adreßspeicher geführt sind, in den Pufferspeicher übernommen werden, während die Fensternummer als binärcodierte Zahl in den Pufferspeicher übertragen wird.

## Patentansprüche

1. Datenselektor für die Datenaufzeichnung eines zu prüfenden Mikrorechnersystems, hiernach Prüfling genannt,
**gekennzeichnet durch**
einen, Tabellen über die zu selektierenden Daten enthaltenden Selektorspeicher, der in einen Adreßspeicher und einen Fensterspeicher aufgeteilt und derart mit den Adreßleitungen des Prüflings verbunden ist, daß die unteren, d.h. die niederwertigen Adreßleitungen des Prüflings an den Adreßspeicher und die oberen, d.h. die höherwertigen, an den Fensterspeicher gelegt sind, sowie ferner durch einen Bit - Komparator, mit dem die Datenbusse von Adreßspeicher und Fensterspeicher, in denen bei Zugriff auf eine Adresse des Prüflings gleichzeitig zwei Zellen angesprochen werden, verglichen werden, der dann einem eingangsseitig mit dem Adreßbus und Datenbus des Prüflings und ausgangsseitig mit einem Rechner verbundenen Pufferspeicher einen Schreib-Puls gibt, wenn an einer Bitposition der beiden Speicher, Adreßspeicher und Fensterspeicher, jeweils eine Eins gesetzt ist.

2. Datenselektor nach Anspruch 1,
**dadurch gekennzeichnet,**
daß im Fensterspeicher je Zelle lediglich ein Bit, im Adreßspeicher gegebenenfalls auch mehrere Bit's gesetzt sind.

3. Datenselektor nach Anspruch 2,
**dadurch gekennzeichnet**,
daß bei mehreren in einer Zelle des Adreßspeichers gesetzten Bit's diese Adresse für mehrere Fenster gültig ist.

4. Datenselektor nach einem der Ansprüche 1 bis 3,
**dadurch gekennzeichnet**,
daß bei Überlappung der Adreßleitungen im Selektorspeicher sich die Fenster in Fensterbereiche unterteilen, deren Anzahl sich aus 2 Exponent, d.h. der Anzahl der überlappenden Adreßleitungen, ergibt.

5. Datenselektor nach einem der Ansprüche 1 bis 4,
**dadurch gekennzeichnet,**
daß zur Reduktion der Adresse lediglich die Adressen, die an den Adreßspeicher geführt sind, in den Pufferspeicher übernommen werden und die Fensternummer als binärcodierte Zahl in den Pufferspeicher übertragen wird.

## Claims

1. Data selector for recording the data of a micro-computer system to be tested, hereinafter referred to as unit under test, characterized by a selector memory containing tables pertaining to the data to be selected, which memory is divided into an address memory and a window memory and is connected to the address lines of the unit under test in such a way that the lower, that is to say the low-order, address lines of the unit under test are connected to the address memory and the higher, that is to say the high-order, address lines are connected to the window memory, and furthermore by a bit comparator with which the data buses of address memory and window memory, in which two cells are addressed simultaneously when an address of the unit under test is accessed, are compared; said comparator then outputs a write pulse to a buffer memory, which is connected on the input side to the address bus and data bus of the unit under test and on the output side to a computer, if a one is set in each case at one bit position of the two memories, address memory and window memory.

2. Data selector according to Claim 1, characterized in that only one bit is set for each cell in the window memory, and if necessary a plurality of bits are also set in the address memory.

3. Data selector according to Claim 2, characterized in that in the case where a plurality of bits are set in a cell of the address memory, said address is valid for a plurality of windows.

4. Data selector according to one of Claims 1 to 3, characterized in that in the case of overlapping of the address lines in the selector memory, the windows are divided into window areas, the number of which is obtained from exponent 2, that is to say the number of overlapping address lines.

5. Data selector according to one of Claims 1 to 4, characterized in that to reduce the address, only the addresses that lead to the address memory are transferred into the buffer memory and the window number is transferred into the buffer memory as a binary-coded number.

## Revendications

1. Sélecteur de données pour l'enregistrement de données d'un système à micro-ordinateur à contrôler, désigné ci-après par l'expression système à contrôler,
caractérisé par
une mémoire de sélecteur, qui contient des tableaux concernant les données à sélectionner qui est subdivisée en une mémoire d'adresses et en une mémoire de fenêtres et qui est reliée aux lignes de transmission d'adresses du système à contrôler de telle sorte que les lignes inférieures, c'est-à-dire de poids faible, de transmission d'adresses du système à contrôler sont raccordées à la mémoire d'adresses, et les lignes supérieures, c'est-à-dire de poids fort, de transmission d'adresses sont raccordées à la mémoire de fenêtre, et en outre par un comparateur de bits, au moyen duquel les bus de transmission de données de la mémoire d'adresses et de la mémoire de fenêtre, dans lesquelles deux cellules sont adressées en même temps lors de l'accès à une adresse du système à contrôler, sont comparées, lequel comparateur de bit fournit alors une impulsion d'enregistrement à une mémoire tampon, qui est reliée côté entrée au bus de transmission d'adresses et au bus de transmission de données du système à contrôler et, côté sortie, à un ordinateur, lorsque respectivement un un est positionné dans une position binaire des deux mémoires, mémoire d'adresses et mémoire de fenêtre.

2. Sélecteur de données suivant la revendication 1, caractérisé par le fait que pour chaque cellule, respectivement seul un bit est positionné dans la mémoire de fenêtres et éventuellement également plusieurs bits sont positionnés dans la mémoire d'adresses.

3. Sélecteur de données suivant la revendication 2, caractérisé par le fait que dans le cas de plusieurs bits positionnés dans une cellule de la mémoire d'adresses, cette adresse est valable pour plusieurs fenêtres.

4. Sélecteur de données suivant l'une des revendications 1 à 3, caractérisé par le fait que, en cas de chevauchement des lignes de transmission d'adresses dans la mémoire du sélecteur, les fenêtres se subdivisent en des parties de fenêtres, dont le nombre est obtenu par élévation au carré, c'est-à-dire le nombre des lignes de transmission d'adresses en chevauchement.

5. Sélecteur de données suivant l'une des revendications 1 à 4, caractérisé par le fait que pour la réduction de l'adresse, seules les adresses, qui sont envoyées à la mémoire d'adresses, sont transférées dans la mémoire tampon, et le numéro de la fenêtre est transféré en tant que nombre codé binaire, dans la mémoire tampon.
